# EUROPEAN PATENT SPECIFICATION

(11) **EP 2 990 328 B1**
(45) Date of publication and mention of the grant of the patent: **01.02.2017**
(21) Application number: 14182549.7
(22) Date of filing: 27.08.2014
(51) Int. Cl.: B64C 1/14

(54) **METHOD OF DISTINGUISHING BETWEEN THE IN-FLIGHT STATUS AND THE ON-GROUND STATUS OF AN AIRCRAFT**
VERFAHREN ZUR UNTERSCHEIDUNG ZWISCHEN DEM FLUGSTATUS UND DEM BODENSTATUS EINES FLUGZEUGS
PROCÉDÉ DE DISTINCTION ENTRE L'ÉTAT EN VOL ET L'ÉTAT AU SOL D'UN AÉRONEF

(43) Date of publication of application: 02.03.2016
(73) Proprietor: Airbus Operations GmbH, 21129 Hamburg (DE)
(72) Inventor: Bredemeier, Kai, 21129 Hamburg (DE); Heuer, Carsten, 21129 Hamburg (DE)
(74) Representative: Bird & Bird LLP

(56) References cited:
- EP-A1- 1 796 960
- EP-A1- 2 674 282

## Description

The invention relates to a method of distinguishing between the in-flight status and the on-ground status of an aircraft, wherein the interior of its fuselage is pressurized during the in-flight status.

In commercial aircraft, the interior of the fuselage is pressurized during flight and only during flight. Information about the status of the aircraft is required for a plurality of purposes, e.g. to initiate a warning when attempting to open a door during the in-flight status (which in fact means that the cabin is pressurized), or to initiate a warning when attempting to open a door with armed slides or prevent inadvertent slide deployment during the on-ground status (which in fact means that the cabin is not pressurized).

Presently, such information is obtained by means of signals generated e.g. by the aircraft engines and/or by the landing gear.

In addition, it is known to use a differential pressure switch connected to the pipe system of the so-called Integrated Standby Instrument System to provide a status signal depending on the pressure difference between the inside and the outside of the aircraft, e.g. as in EP 1 796 960 B1. Generation of the corresponding signal of the differential pressure switch is effective, but requires considerable wiring including connectors to transmit such signal to all doors of the aircraft fuselage. The same applies to the use of the corresponding signals generated by means of the engines or by means of the landing gear for in-flight status and on-ground status evaluation.

It is an object of the invention to provide for a simplified way of distinguishing between in-flight status and on-ground status of an aircraft.

Such an object is solved according to the invention by monitoring a deformation of a fuselage section and generating a signal dependent on such deformation, wherein preferably such signal is generated upon detecting a predetermined deformation. The signal is a status signal which indicates whether the aircraft is currently in in-flight status or in on-ground status, i.e. whether the aircraft is currently in flight or on the ground.

By using detection of deformation of a fuselage section an indication is obtained whether the aircraft is in in-flight status or in ground status, since pressurizing and depressurizing of the interior of the fuselage is effected by means of signals from other sources.

The signal generated according to the invention may, e.g., also be used to control an optical indicator, such as the differential pressure warning light (i.e. a warning light indicating the presence of a differential pressure between the interior of the aircraft and the exterior of the aircraft or that a certain threshold has been exceeded for that differential pressure) and/or the slide armed warning light (i.e. a warning light indicating that a slide associated with a door is armed) of one or more doors in the fuselage. Additionally or alternatively, the signal generated according to the invention may also be used to contribute to prevention of opening doors on ground whilst the fuselage is pressurized or is subject to a (minimum) differential pressure and/or to contribute to prevention of inadvertent slide deployments.

In any case, use of the information obtained by monitoring deformation of a fuselage section renders it possible to minimize the wiring length between such fuselage section and the means to be controlled by the signal generated, e.g. the optical indicator such as the differential pressure warning light and/or the slide armed warning light, and to thereby reduce the wiring required.

The signal of interest may be generated e.g. by means of one or more resistance strain gauges or by means of at least one optical sensor. This generation may occur directly or via an evaluation means, which is adapted to receive sensor signals from the at least one resistance strain gauge or the at least one optical sensor, to generate the signal of interest on the basis of the sensor signals.

When conducting the method according to the invention by means of resistance strain gauges, one or more resistance strain gauges may be mounted on a flexible board spaced from each other, which board is fixed to said fuselage section. Thus, upon deformation of the fuselage section, the board is also deformed, and this deformation is detected by means of the resistance strain gauges. However, it is preferred that one or more resistance strain gauges are mounted spaced from each other directly to the fuselage section. In that case the resistance strain gauges directly detect the deformation of the fuselage section.

When using an optical sensor, a suitable optical sensor may comprise an optical transmitter and an optical multiple receiver attached to a flexible carrier or circuit board or the like, wherein the flexible carrier or circuit board or the like is fixed to the corresponding fuselage section, possibly via an adapter or intermediate piece providing a planar surface for the flexible carrier or circuit board or the like in the non-deformed state of the fuselage section. Upon deformation of the section and thus the flexible carrier or circuit board or the like, the positions or relative orientations of the optical transmitter and of the multiple receiver change with respect to each other so that the light beam emitted by the optical transmitter is received by another part of the multiple receiver. This provides an indication of the deformation. The multiple receiver may comprise multiple distinct light sensing fields or receiver parts and allow to distinguish which of the sensing fields or receiver parts currently receive the light beam emitted by the optical transmitter. The optical sensor may comprise a housing in which the optical transmitter, the optical multiple receiver and the flexible carrier or circuit board or the like are disposed in order to provide protection against the environment. In any case, the optical sensor is preferably provided as a unit.

The fuselage section referred to above may be, for example, a part of a door or another portion of a fuselage of an aircraft.

The invention will be described in the following in more detail with respect to the drawings showing schematically an embodiment.
- Fig. 1: shows in principle the skin portion of an aircraft door including window opening.
- Fig. 2: shows in principle an optical sensor comprising a flexible board, which board is shown in non-deformed and in deformed state.

The skin portion 1 of an aircraft door comprises the usual window cutout 2. On this skin portion, positions for deformation sensors 3 are indicated. These sensors may e.g. be resistance strain gauges electrically connected to a corresponding evaluation circuit (not shown) provided in the aircraft door. The circuit is connected to a power supply and may in addition be connected to a battery pack to be activated upon failure of the power supply. Thus, a device for generating signals for representing the in-flight status and the on-ground status of the aircraft can be located locally in each door to control e.g. the differential pressure warning light and/or the slide armed warning light of the door without having to rely on signals generated by other sources located more centrally in the aircraft. The signals generated by the devices may also contribute to the prevention of inadvertent slide deployments.

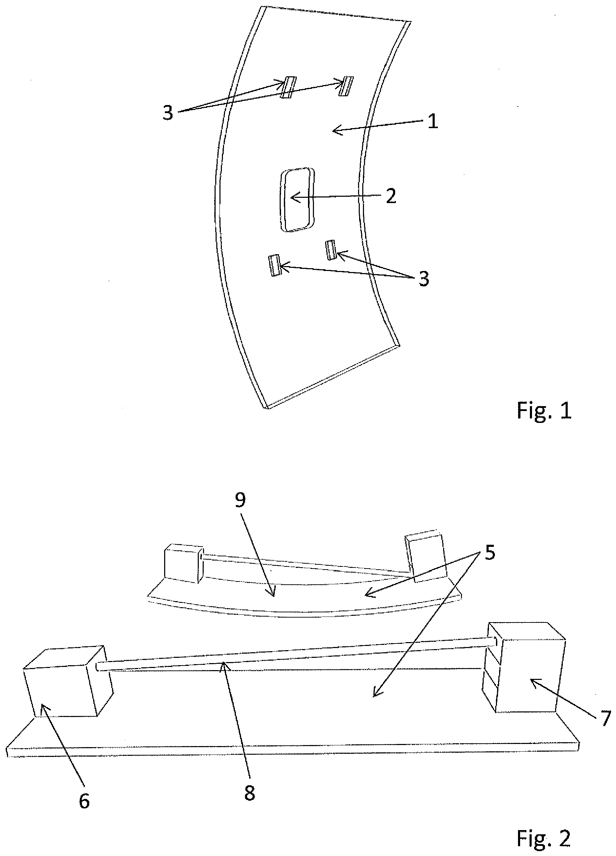

Rather than using pairs of resistance strain gauges 3, as indicated in Fig. 1, one or more optical sensors may be used, as shown in principle in Fig. 2 (housing of the sensor not shown). Such an optical sensor is of conventional structure and comprises a transmitter 6 and a multiple receiver 7, both attached to a flexible board 5 and spaced from each other. The board 5 is attached to the skin portion 1 of the door so that upon deformation of the skin portion the board 5 deforms correspondingly, as indicated in the upper portion of Fig. 2 by deformation 9.

In the on-ground status of the aircraft the board 5 is not deformed and, as indicated in the lower portion of Fig. 2, the light beam 8 emitted by the transmitter 6 is received by the upper section of the multiple receiver 7. Upon deformation of the board 5 in in-flight status, the light beam 8 moves from the upper section of the receiver 7 to a lower section which provides not only an indication as to deformation of the board 5 and, therefore, of the skin portion 1 of the aircraft door, but also an indication as to the degree of deformation.

## Claims

1. A method of distinguishing between in-flight status and on-ground status of an aircraft, wherein the interior of a fuselage is pressurized in in-flight status, **characterized by** monitoring deformation of a fuselage section and generating a signal dependent on such deformation.

2. A method according to claim 1, **characterized in that** the signal is generated upon detecting a predetermined deformation.

3. A method according to claim 1 or 2, **characterized in that** said section forms part of a door of the fuselage.

4. A method according to one of the preceding claims, **characterized in that** said signal is used to activate an optical indicator in passenger doors.

5. A method according to one of the preceding claims, **characterized in that** said signal is used to contribute to prevention of opening at least one door in on-ground status while the fuselage is pressurized and/or to contribute to prevention of inadvertent slide deployments.

6. A method according to one of the preceding claims, **characterized in that** the signal is generated by means of at least one resistance strain gauge.

7. A method according to one of claims 1 to 5, **characterized in that** the signal is generated by means of at least one optical sensor.

8. A device for conducting the method according to any of the preceding claims, comprising a sensor arrangement (3; 5-7), which includes at least one sensor (3; 6, 7) adapted to be
secured to a fuselage section of an aircraft and
to
generate a sensor signal which depends on a deformation of the fuselage section (1), and an evaluation means operable connected to the sensor arrangement (3; 5-7) and adapted to receive the sensor signal and to generate, based on the sensor signal, a status signal indicating whether the aircraft is in in-flight status or in on-ground status.

9. A device according to claim 8, wherein the device is adapted for conducting the method according to claim 6, **characterized in that** the sensor arrangement comprises at least two resistance strain gauges (3) adapted to be mounted
spaced from each other on said fuselage section (1) or mounted
spaced from each other on a flexible board which is adapted
to be fixed to said fuselage section (1).

10. A device according to claim 8, wherein the device is adapted for conducting the method according to claim 7, **characterized in that** the sensor arrangement comprises an optical sensor, which comprises an optical transmitter (6) and an optical multiple receiver (7) mounted on a flexible carrier (5) spaced from each other, and which is adapted to be fixed to
said fuselage section (1).

## Patentansprüche

1. Verfahren zum Unterscheiden zwischen einem Flugstatus und einem Bodenstatus eines Flugzeuges, wobei das Innere eines Rumpfes im Flugstatus unter Druck steht, **gekennzeichnet durch** Überwachen von Verformung eines Rumpfabschnitts und Erzeugen eines von solcher Verformung abhängenden Signals.

2. Verfahren nach Anspruch 1, **dadurch gekennzeichnet, dass** das Signal erzeugt wird, wenn eine vorbestimmte Deformation erkannt wird.

3. Verfahren nach Anspruch 1 oder 2, **dadurch gekennzeichnet, dass** der Abschnitt Teil einer Tür des Rumpfes bildet.

4. Verfahren nach einem der vorhergehenden Ansprüche, **dadurch gekennzeichnet, dass** das Signal verwendet wird, um eine optischen Anzeigeeinrichtung in Passagiertüren zu aktivieren.

5. Verfahren nach einem der vorhergehenden Ansprüche, **dadurch gekennzeichnet, dass** das Signal verwendet wird, dazu beizutragen, um Öffnen zumindest einer Tür im Bodenstatus zu verhindern, während der Rumpf unter Druck steht, und/oder zur Verhinderung von unbeabsichtigten Rutschenentfaltungen beizutragen.

6. Verfahren nach einem der vorhergehenden Ansprüche, **dadurch gekennzeichnet, dass** das Signal mittels zumindest eines Dehnungmessstreifens erzeugt wird.

7. Verfahren nach einem der Ansprüche 1 bis 5, **dadurch gekennzeichnet, dass** das Signal mittels zumindest eines optischen Sensors erzeugt wird.

8. Vorrichtung zur Durchführung der Methode nach einem der vorhergehenden Ansprüche mit einer Sensoranordnung (3; 5 - 7), welche zumindest einen Sensor (3; 6, 7) umfasst, der dazu eingerichtet ist, an einem Rumpfabschnitt eines Flugzeuges befestigt zu werden und ein Sensorsignal zu erzeugen, das von einer Verformung des Rumpfabschnitts (1) abhängt, und einem Auswertungsmittel, das funktional mit der Sensoranordnung (3; 5-7) verbunden und dazu eingerichtet ist, das Sensorsignal zu empfangen und basierend auf dem Sensorsignal ein Statussignal zu erzeugen, das anzeigt, ob das Flugzeug im Flugstatus oder im Bodenstatus ist.

9. Vorrichtung nach Anspruch 8, wobei die Vorrichtung dazu eingerichtet ist, das Verfahren nach Anspruch 6 durchzuführen, **dadurch gekennzeichnet, dass** die Sensoranordnung zumindest zwei Dehnungsmessstreifen (3) aufweist, die dazu eingerichtet sind, beabstandet voneinander an dem Rumpfabschnitt befestigt zu werden oder beabstandet voneinander an einem flexiblen Board befestigt zu werden, welches dazu eingerichtet ist, an dem Rumpfabschnitt (1) fixiert zu werden.

10. Vorrichtung nach Anspruch 8, wobei die Vorrichtung dazu eingerichtet ist, das Verfahren nach Anspruch 7 durchzuführen, **dadurch gekennzeichnet, dass** die Sensoranordnung einen optischen Sensor umfasst, der einen optischen Transmitter (6) und einen optischen Mehrfachempfänger (7) umfasst, die auf einem flexiblen Träger (5) beabstandet voneinander befestigt sind, und welche dazu eingerichtet ist, an dem Rumpfabschnitt (1) fixiert zu werden.

## Revendications

1. Procédé pour faire la distinction entre le statut en vol et le statut au sol d'un aéronef, dans lequel l'intérieur du fuselage est pressurisé lorsque le statut est en vol, **caractérisé par** la surveillance de la déformation d'une section du fuselage et la génération d'un signal dépendant d'une telle déformation.

2. Procédé selon la revendication 1, **caractérisé en ce que** le signal est généré lors de la détection d'une déformation prédéterminée.

3. Procédé selon la revendication 1 ou 2, **caractérisé en ce que** ladite section forme une partie d'une porte du fuselage.

4. Procédé selon l'une des revendications précédentes, **caractérisé en ce que** ledit signal est utilisé pour activer un indicateur optique dans les portes passagers.

5. Procédé selon l'une des revendications précédentes, **caractérisé en ce que** ledit signal est utilisé pour contribuer à empêcher d'ouvrir au moins une porte, en statut au sol, pendant que le fuselage est pressurisé, et/ou pour contribuer à empêcher des déploiements de glissières par inadvertance.

6. Procédé selon l'une des revendications précédentes, **caractérisé en ce que** le signal est généré au moyen d'au moins une jauge de déformation à résistance.

7. Procédé selon l'une des revendications 1 à 5, **caractérisé en ce que** le signal est généré au moyen d'au moins un capteur optique.

8. Dispositif pour réaliser le procédé selon l'une quelconque des revendications précédentes, comprenant un agencement de capteurs (3 ; 5-7), qui comprend au moins un capteur (3 ;6, 7) adapté pour être fixé sur une section de fuselage d'un aéronef et pour générer un signal de capteur qui dépend d'une déformation de la section de fuselage (1), et un moyen d'évaluation actionnable connecté à l'agencement de capteurs (3 ; 5-7) et adapté pour recevoir le signal de capteur et générer, en fonction du signal de capteur, un signal de statut indiquant si l'aéronef est en statut en vol ou en statut au sol.

9. Dispositif selon la revendication 8, dans lequel le dispositif est adapté pour réaliser le procédé selon la revendication 6, **caractérisé en ce que** l'agencement de capteurs comprend au moins deux jauges de déformation à résistance (3) adaptées pour être montées de façon espacées l'une de l'autre sur une carte souple qui est adaptée pour être fixée à ladite section de fuselage (1).

10. Dispositif selon la revendication 8, dans lequel le dispositif est adapté pour réaliser le procédé selon la revendication 7, **caractérisé en ce que** l'agencement de capteur comprend un capteur optique, qui comprend un émetteur optique (6) et un récepteur multiple optique (7) montés sur un support souple (5), de façon espacés l'un de l'autre, et qui est adapté pour être fixé à ladite section de fuselage (1).
